# EUROPÄISCHE PATENTSCHRIFT

(11) **EP 0 803 384 B1**
(45) Veröffentlichungstag und Bekanntmachung des Hinweises auf die Patenterteilung: **22.11.2000**
(21) Anmeldenummer: 97105504.1
(22) Anmeldetag: 03.04.1997
(51) Int. Cl.: B60G 9/02, B60G 7/04

(54) **Einrichtung zum Begrenzen der Pendelbewegung einer Starrachse eines Nutzfahrzeuges, insbesondere eines Ackerschleppers**
Device for limiting the oscillating motion of a rigid axle of a commercial vehicle, especially of an agricultural tractor
Dispositif pour limiter le mouvement pendulaire d'un essieu rigide d'un véhicule utilitaire, notamment d'un tracteur agricole

(30) Priorität: 24.04.1996 DE 19616302
(43) Veröffentlichungstag der Anmeldung: 29.10.1997
(73) Patentinhaber: Agco GmbH & Co., 87616 Marktoberdorf (DE)
(72) Erfinder: Schott, Herbert, 87616 Marktoberdorf (DE)

(56) Entgegenhaltungen:
- DE-A- 3 901 757
- DE-A- 4 129 715
- DE-A- 4 235 264
- DE-U- 9 017 845
- FR-A- 2 702 012
- US-A- 4 053 171
- US-A- 4 393 959
- US-A- 5 082 085

## Beschreibung

Die Erfindung betrifft eine Einrichtung zum Begrenzen der Pendelbewegung einer Starrachse eines Nutzfahrzeuges, insbesondere eines Ackerschleppers, die über ein Pendellager an einer gegenüber dem Fahrgestell des Fahrzeuges abgefederten Lenkeranordnung aufgehängt ist, wobei die Pendelbewegungen der Starrachse begrenzt sind durch an dieser angreifende Anschlagelemente, die mit fahrgestellseitigen Druckstützen zusammenwirken.

Mit einer aus der DE 39 01 757 C2 bekannten Einrichtung dieser Art soll nicht nur die Pendelbewegung der Starrachse, sondern auch deren Ein- und Ausfederung begrenzt werden. Deshalb sind die Anschlagelemente und Druckstützen so ausgestaltet, daß sie bei eingefederter Starrachse als Druckanschlag und bei ausgefederter Starrachse als Zuganschlag wirken. Die Starrachse kann somit innerhalb eines vorgegebenen begrenzten Federweges frei federn und, zumindest in nur wenig ein- oder ausgefedertem Zustand, ungehindert pendeln. Mit zunehmender Annäherung an die Federungsendlagen ist die Pendelbeweglichkeit der Starrachse allerdings stark eingeschränkt, bis sie schließlich bei max. Ein- und Ausfederung vollständig unterbunden ist. Beim schnellen Fahren auf relativ unebenem Gelände ist daher mit erheblichen Einbußen beim Fahrkomfort zu rechnen.

Die bekannte Einrichtung erlaubt es zudem nicht, die Starrachse in einer bestimmten Pendelstellung festzustellen, um die Sicherheit gegen Umsturz beim Befahren von quer zur Fahrtrichtung abfallendem Gelände zu erhöhen.

Aufgabe der Erfindung ist, eine Einrichtung der Eingangs beschriebenen Art zu schaffen, die es bei unbehinderter freier Federung wahlweise ermöglicht, die Starrachse in einer einstellbaren Pendelstellung festzusetzen oder über ihren gesamten Federungsweg frei und uneingeschränkt pendeln zu lassen.

Die Lösung dieser Aufgabe besteht darin, daß oberhalb des Pendellagers an einer Anlenkstelle der Starrachse mindestens ein in Fahrzeugquerrichtung verlaufender, gesteuert druckbeaufschlagbarer Hydraulikzylinder angelenkt ist, der sich an einer fahrgestellseitigen, bei nicht eingefederter Lenkeranordnung zumindest annähernd in gleicher Höhe wie die Anlenkstelle (Bolzen) an der Starrachse liegenden Anlenkstelle (Bolzen) abstützt.

Eine solche Einrichtung ermöglicht es, die Pendelfähigkeit der Starrachse und damit das Fahrverhalten des Fahrzeuges den gegebenen Bodenverhältnissen anzupassen, ohne die Federung zu beeinflussen. Für schnelle Transportfahrten auf relativ ebener Fahrbahn kann die Pendelung der Starrachse auf ihre horizontalen Mittelstellung begrenzt werden, und so insbesondere das Durchfahren von Kurven sicherer gestaltet werden. Für Arbeitsfahrten entlang geneigter Flächen kann die Starrachse in ihrer Neutralstellung oder in geringer Schrägstellung festgestellt werden, um so ebenfalls die Kippsicherheit zu erhöhen.

Aus den Unteransprüchen gehen weitere Ausgestaltungen der Erfindung hervor.

Die Erfindung wird im folgenden an Hand von Zeichnungen näher erläutert. Es zeigen
- Fig. 1: eine Ansicht einer Starrachse mit einem doppeltwirkenden Hydraulikzylinder zur Beeinflussung der Pendelbewegung in Fahrzeuglängsrichtung gesehen,
- Fig. 2: eine Ansicht der Starrachse gemäß Fig. 1 von oben und
- Fig. 3: eine Ansicht einer Starrachse entspr. Fig. 1 mit zwei einfachwirkenden Hydraulikzylindern.

Mit seitlichem Abstand zur Längsmittelebene eines Ackerschleppers ist in zwei in Fahrzeuglängsrichtung hintereinander am Fahrgestell abgestützten Schwenklagern 1, 2 eine Querlenkeranordnung 3 verschwenkbar gelagert. Ein in Fahrzeuglängsrichtung nach vorn weisender Achsstummel 3a der Lenkeranordnung 3 bildet gemeinsam mit einer darauf gelagerten Starrachse 4, von der lediglich ein mittlerer Teil und ein Teil des Lenkgestänges gezeigt ist, ein Pendellager 5, um das die Starrachse 4 entsprechend dem Winkel a pendelbar ist. Beim Ein- und Ausfedern der Lenkeranordnung 3 bewegt sich das Pendellager 5 annähernd in der Längsmittelebene des Fahrzeuges in vertikaler Richtung, wie dies der Doppelpfeil andeutet.

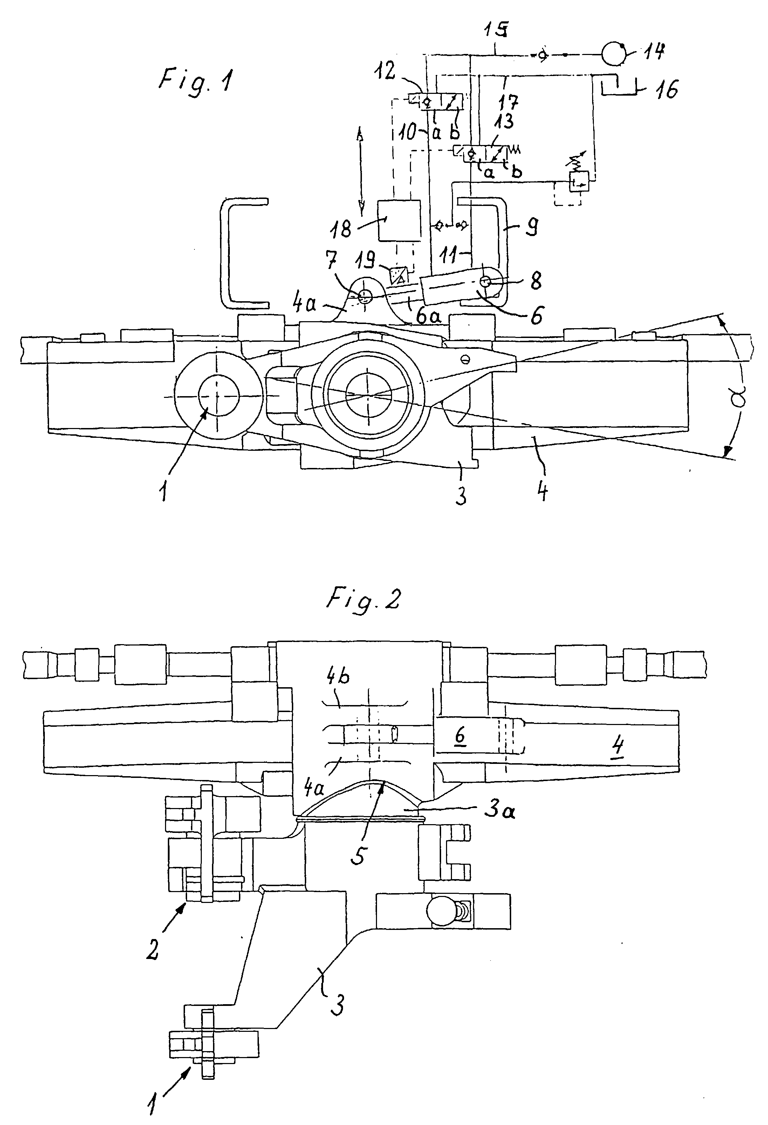

Oberhalb des Pendellagers 5 sind an der Starrachse 4 zwei Lageraugen 4a, 4b angebracht, an denen, wie aus dem Ausführungsbeispiel nach Fig. 1 hervorgeht, das freie Ende der Kolbenstange 6a eines doppeltwirkenden Hydraulikzylinders 6 mittels eines Bolzens 7 angelenkt ist. Im anderen Endbereich ist der Hydraulikzylinder 6 über einen Bolzen 8 am Fahrgestell 9 des Fahrzeuges angelenkt, wobei beide Anlenkstellen des Hydraulikzylinders 6 in der gezeigten Neutralstellung der Starrachse 4 zumindest annähernd in gleicher Höhe liegen. Infolge dieser annähernd horizontalen Lage bildet der Hydraulikzylinder 6 für die ein- und ausfedernde Lenkeranordnung 3 kein Hindernis, da er dabei um seine fahrgestellseitige Anlenkstelle verschwenkt.

Ein im Hydraulikzylinder 6 verschiebbarer, mit der Kolbenstange 6a verbundener Kolben unterteilt den Zylinderinnenraum in bekannter Weise in zwei Druckräume, in die Druckmittelleitungen 10, 11 einmünden. Beide Druckmittelleitungen gehen jeweils von einem zugeordneten, in eine Sperrstellung oder eine Durchgangsstellung schaltbaren Wegeventil 12, 13 aus, das an eine von einer Pumpe 14 ausgehende Druckmittelleitung 15 und eine zu einem Druckmittelbehälter 16 führende Druckmittelleitung 17 angeschlossen ist. Die Wegeventile 12, 13 sind elektrisch ansteuerbar mittels einer Steuereinrichtung 18, die die Vorgaben des Fahrzeugführers hinsichtlich der gewünschten Pendelart der Starrachse 4 in entspr. Signale an die Wegeventile 12, 13 umsetzt.

Der nachstehenden Tabelle sind die in Abhängigkeit von der Schaltstellung a oder b der Wegeventile 12, 13 wählbaren Bewegungsmöglichkeiten der Starrachse zu entnehmen:

| Ventil 12 | Ventil 13 | Bewegungsmöglichkeit |
|---|---|---|
| a | a | Pendelung der Starrachse in einer eingestellten Pendelstellung blockiert |
| b | b | freie Pendelung |
| b | a | Verschwenken der Starrachse entgegen dem Uhrzeigersinn in eine gewünschte Pendelstellung |
| a | b | Verschwenken der Starrachse im Uhrzeigersinn in eine gewünschte Pendelstellung |

Welche dieser Bewegungsmöglichkeiten auch gewählt wird, die Funktionsweise der Federung der Lenkeranordnung 3 bleibt davon unberührt. Dies selbst dann, wenn beide Wegeventile 12, 13 die Schaltstellung a einnehmen und demzufolge der Hydraulikzylinder 6 in beiden Richtungen blockiert ist, um die Pendelung der Starrachse 4 zu unterbinden. In diesem Fall verschwenkt der Hydraulikzylinder 6 um den Bolzen 8 entsprechend dem Weg, den das Pendellager 5 beim Ein- und Ausfedern in Richtung des Doppelpfeils zurücklegt. Hierbei wird der Bolzen 7 auf einer schwach gekrümmten Bahn geführt, wodurch die Starrachse 3 während des Ein- und Ausfederns unmerklich um das Pendellager 5 pendelt.

An die Steuereinrichtung 18 ist außerdem ein dem Hydraulikzylinder 6 zugehöriger Lagesensor 19 für die relative Lage des Kolbens im bzw. die relative Stellung der Kolbenstange 6a zum Hydraulikzylinder 6 angeschlossen. Hierdurch kann bei Bedarf der in der Schaltstellung b/b der Wegeventile 12, 13 in freier Pendelung erzielbare Pendelwinkel der Starrachse 4 auf Pendelwinkel kleiner als der konstruktiv vorgegebene max. Pendelwinkel α eingestellt werden.

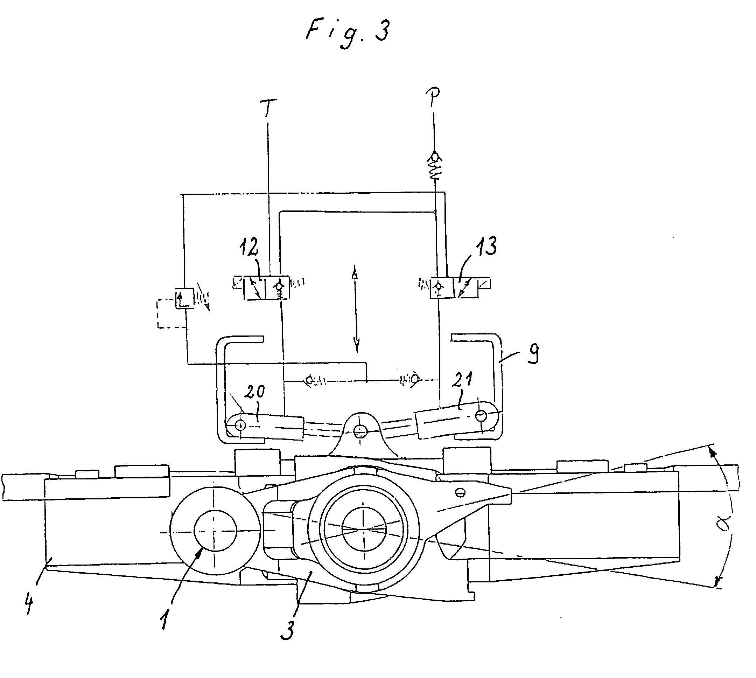

Das Ausführungsbeispiel nach Fig. 3 unterscheidet sich von dem gemäß Fig. 1 dadurch, daß an Stelle eines doppeltwirkenden Hydraulikzylinders zwei einfachwirkende Hydraulikzylinder 20, 21 zur Anwendung kommen. Jedem dieser Hydraulikzylinder ist eines der Wegeventile 12, 13 zugeordnet, über das je nach Schaltstellung des betr. Wegeventils sein einziger Druckraum entweder mit der Pumpe 14 oder dem Druckmittelbehälter 16 verbunden ist. Je nach Schaltstellung der unabhängig voneinander durch eine nicht gezeigte Steuereinrichtung schaltbaren Wegeventile kann so die Pendelfähigkeit der Starrachse 4 in der gewünschten Weise beeinflusst werden.

## Patentansprüche

1. Einrichtung zum Begrenzen der Pendelbewegung einer Starrachse (4) eines Nutzfahrzeuges, insbesondere eines Ackerschleppers, die über ein Pendellager (5) an einer gegenüber dem Fahrgestell (9) des Fahrzeuges abgefederten Lenkeranordnung (3) aufgehängt ist, wobei die Pendelbewegungen der Starrachse begrenzt sind durch an dieser angreifende Anschlagelemente, die mit fahrgestellseitigen Druckstützen zusammenwirken,
**dadurch gekennzeichnet**,
daß oberhalb des Pendellagers (5) an einer Anlenkstelle der Starrachse (4) mindestens ein in Fahrzeugquerrichtung verlaufender, gesteuert druckbeaufschlagbarer Hydraulikzylinder (6) angelenkt ist, der sich an einer fahrgestellseitigen, bei nicht eingefederter Lenkeranordnung (3) zumindest annähernd in gleicher Höhe wie die Anlenkstelle (7) an der Starrachse (4) liegenden Anlenkstelle (8) abstützt.

2. Einrichtung nach Anspruch 1,
**dadurch gekennzeichnet**,
daß an der Anlenkstelle der Starrachse (4) zwei gegeneinanderderichtete einfachwirkende Hydraulikzylinder (20, 21) angreifen.

3. Einrichtung nach Anspruch 1 oder 2,
**gekennzeichnet durch**
eine Steuereinrichtung (18) für die Druckbeaufschlagung des bzw. der Hydraulikzylinder (6, 20, 21), die in Signalverbindung mit einer ein der Pendelstellung der Starrachse (4) entsprechendes Signal liefernden Einrichtung steht, und bei Erreichen einer vorgegebenen Pendelstellung der Starrachse (4) eine hydraulische Blockierung des bzw. der Hydraulikzylinder (6, 20, 21) bewirkt.

4. Einrichtung nach Anspruch 3,
**dadurch gekennzeichnet,**
daß der bzw. die Hydraulikzylinder (6, 20) mit einem Lagesensor (18) zur Ermittlung der Position der Kolbenstange (6a) ausgerüstet sind.

## Claims

1. Device for limiting the oscillating movement of a rigid axis (4) of a commercial vehicle, in particular of a farming tractor, which is suspended by means of a pendulum bearing (5) on a steering arrangement (3), which is spring-mounted relative to the chassis (9) of the vehicle, the oscillating movements of the rigid axis being limited by stop elements which act thereon and which co-operate with pressure supports located on the chassis side, characterised in that there is coupled above the pendulum bearing (5) to a coupling point of the rigid axis (4) at least one hydraulic cylinder (6) which extends in the transverse direction of the vehicle and which can be pressure-activated in a controlled manner and which is supported on a coupling point (8) which is located on the chassis side and which is at least approximately at the same height as the coupling point (7) on the rigid axis (4) when the steering arrangement (3) is not compressed.

2. Device according to claim 1, characterised in that two single-acting hydraulic cylinders (20, 21), directed against each other, act on the coupling point of the rigid axis (4).

3. Device according to claim 1 or claim 2, characterised by a control device (18) for the pressure-activation of the hydraulic cylinder(s) (6, 20, 21), which has a signal-connection to a device, which supplies a signal which corresponds to the oscillating position of the rigid axis (4), and which activates hydraulic locking of the hydraulic cylinder(s) (6, 20, 21) when a predetermined oscillating position of the rigid axis (4) is reached.

4. Device according to claim 3, characterised in that the hydraulic cylinder(s) (6, 20) is/are fitted with a position sensor (18) for determining the position of the piston rod (6a).

## Revendications

1. Installation pour limiter le mouvement pendulaire d'un essieu rigide (4) d'un véhicule utilitaire, notamment d'un tracteur agricole, accrochée par l'intermédiaire d'un palier pendulaire (5) à un dispositif de bras (3) suspendu par rapport au châssis (9) du véhicule,
les mouvements pendulaires de l'essieu rigide (3) étant limités par des éléments de butée agissant sur ceux-ci et coopérant avec des appuis de pression du côté du châssis,
caractérisée en ce qu'
au dessus du palier pendulaire (5), en un point d'articulation de l'essieu rigide (4), est articulé au moins un vérin hydraulique (6) commandé, sollicité en pression et dirigé dans la direction transversale du véhicule, ce vérin s'appuyant, lorsque le dispositif de bras (3) n'est pas en compression, du côté du châssis du véhicule, au moins sensiblement à la même hauteur que le point d'articulation (7) sur le point d'articulation (8) de l'essieu rigide (4).

2. Installation selon la revendication 1,
caractérisée par
deux vérins hydrauliques (20, 21) à simple effet, opposés, agissant sur le point d'articulation de l'essieu rigide (4).

3. Installation selon l'une quelconque des revendications 1 ou 2,
caractérisée par
une installation de commande (18) pour appliquer la pression aux vérins hydrauliques (6, 20, 21), qui est reliée pour la transmission des signaux à une installation fournissant un signal correspondant à la position pendulaire de l'essieu rigide (4) et, lorsqu'on atteint une position pendulaire prédéterminée pour l'essieu rigide (4), cela produit un blocage hydraulique du ou des vérins hydrauliques (6, 20, 21).

4. Installation selon la revendication 3,
caractérisée en ce que
le ou les vérins hydrauliques (6, 20) sont équipés d'un capteur de position (18) pour déterminer la position de la tige de piston (6a).
